# EUROPEAN PATENT SPECIFICATION

(11) **EP 2 915 726 B1**
(45) Date of publication and mention of the grant of the patent: **08.05.2019**
(21) Application number: 15157307.8
(22) Date of filing: 03.03.2015
(51) Int. Cl.: B62D 35/00, B62D 37/02

(54) **METHOD AND SYSTEM TO ENSURE SATISFACTORY FUNCTION OF AN AIR DEFLECTOR DEVICE OF A VEHICLE**
VEFAHREN UND SYSTEM ZUM GEWÄHREN EINER ZUVERLÄSSIGEN FUNKTION EINER LUFTLEITVORRICHTUNG EINES FAHRZEUGS
PROCÉDÉ ET SYSTÈME POUR ASSURER LE FONCTIONNEMENT SATISFAISANT D'UN DISPOSITIF DE DÉFLECTEUR D'AIR D'UN VÉHICULE

(30) Priority: 04.03.2014 SE 1450241
(43) Date of publication of application: 09.09.2015
(73) Proprietor: Scania CV AB, 151 87 Södertälje (SE)
(72) Inventor: Johansson, Jonny, 147 71 Grödinge (SE)

(56) References cited:
- WO-A1-2011/075009
- WO-A1-2013/117539
- WO-A1-2014/133424
- GB-A- 2 465 393

## Description

### TECHNICAL AREA

The invention relates to a method to ensure the acceptable function of an air guiding device at a vehicle according to the introduction to claim 1. The invention relates to a method to ensure the acceptable function of an air guiding device at a vehicle. The invention relates also to a motor vehicle. The invention relates also to a computer program and a computer program product.

### BACKGROUND

When travelling, vehicles displace air, and the air resistance influences the fuel consumption of the vehicle. For vehicles such as trucks with a forward vehicle body and a rear vehicle body that is coupled behind the forward vehicle body and that extends upwards and/or sideways beyond the forward vehicle body, the front surface of extended parts of the rear vehicle body will cause significant air resistance. In order to reduce air resistance for such a vehicle, an air guiding device is used, supported by means of the forward vehicle body. Such a rear vehicle body is often exchangeable and the dimensions can differ, which for the optimal reduction of the air resistance requires that the air guiding device be adjustable.

WO2013-117539 reveals an air guiding device for such a vehicle in which the air guiding device can be adjusted by means of an adjuster in the form of an electric motor, and whereby a parameter that corresponds to the adjustment force required is determined during adjustment of the air guiding device. The air guiding device is adjusted between a first condition and a second condition in an adjustment procedure, known as a "sweep", in order subsequently to be adjusted by means of a control unit into the condition in which the value of the parameter is at its lowest value, which corresponds to the lowest air resistance during travel. The automatic correct adjustment of the roof-mounted air guiding device is in this way made possible.

If the conditions during the adjustment process have been anomalous, for example, by the air guiding device being influenced by wind gusts, displaced air from oncoming vehicles or similar, the parameter that has been determined corresponding to the optimal condition for the lowest possible air resistance may be erroneous, such that the air guiding device is adjusted to a non-optimal condition, which results in an increased fuel consumption.

### PURPOSE OF THE INVENTION

One purpose of the present invention is to achieve a method and a system to determine the functional status of an air guiding device at a vehicle that facilitates the ensuring process.

### SUMMARY OF THE INVENTION

This and other purposes, which are made clear by the description below, are achieved by means of a method, a system, a motor vehicle, a computer program and a computer program product of the type described in the introduction, and that furthermore demonstrate the distinctive features specified in the characterising part of the attached independent patent claims. Preferred embodiments of the method and the system are defined in the attached non-independent claims.

According to the invention, the purposes are achieved with a method to ensure the acceptable function of an air guiding device at a vehicle, which vehicle has a longitudinal axis parallel to the normal direction of travel of the vehicle and which vehicle comprises a first vehicle body and a second vehicle body arranged behind the first vehicle body and extending upwards and/or sideways beyond the first vehicle body, whereby the air guiding device is supported by means of the said first vehicle body and can be adjusted relative to the said longitudinal axis for the purpose of reducing air resistance, whereby the air guiding device can be adjusted by means of adjusters and whereby a parameter that corresponds to the adjustment force required is determined during adjustment of the air guiding device, comprising the following steps: to determine continuously the pressure of oncoming air against the vehicle in its direction of travel; to determine during an adjustment procedure a time course of the said parameter; and, based on the pressure of oncoming air against the vehicle in its direction of travel that is determined in this way during the said adjustment procedure, to assess the reliability of the time course of the said parameter determined in this way. It is in this way made easier to ensure the acceptable function of the roof-mounted air guiding device, whereby the risk for erroneous adjustment of the air guiding device is minimised, such that fuel consumption due to air resistance can be minimised. The determination of the pressure of oncoming air against the vehicle in its direction of travel is achieved according to one variant by means of the air quantity gauge of the vehicle, whereby no extra sensor is required.

According to one embodiment, the method comprises the step of determining whether the time course of the said parameter that was determined during the adjustment process took place at an unambiguous and reliably determined pressure. Ensuring the acceptable function of the roof-mounted air guiding device is in this way further improved, whereby the risk for erroneous adjustment of the air guiding device is minimised, such that fuel consumption due to air resistance can be minimised.

According to one embodiment, the method comprises the step of, in the event that the pressure that is determined is not unambiguous or reliable, adapting the interpretation of the time course of the said parameter that has been determined during the adjustment process. Ensuring the acceptable function of the roof-mounted air guiding device is in this way further improved, whereby the risk for erroneous adjustment of the air guiding device is minimised, such that fuel consumption due to air resistance can be minimised.

According to one embodiment of the method the step of adapting the said interpretation includes the determination of a further time course of the said parameter under essentially corresponding conditions with respect to the motion of the vehicle, including the subsequent assessment of reliability. A method of securely ensuring the function is in this way achieved, whereby the process of ensuring the acceptable function of a roof-mounted air guiding device is further improved, whereby the risk for erroneous adjustment of the air guiding device is minimised, such that fuel consumption due to air resistance can be minimised.

According to one embodiment of the method, the step of adapting the said interpretation includes correction of the time course of the said parameter determined in this way on the basis of the said pressure that has been determined during the adjustment process. No further adjustment process with its subsequent assessment of reliability is in this way required, which reduces the fuel consumption on the basis of such further adjustment process.

A reference adjustment process takes place when the vehicle is stationary or travelling at low speed. A simple process of ensuring the function of acceptable function of the roof-mounted air guiding device is in this way made possible given that the conditions are to be the same during each such adjustment sweep, and where deviations are made clear.

The adjustment process takes place when the vehicle is travelling. A simple process of ensuring the acceptable function of the roof-mounted air guiding device is in this way made possible in conditions in which the function of the air guiding device to reduce air resistance is used, which ensures the roof-mounted air guiding device, given that the conditions are to be the same during each such adjustment sweep, and where deviations at two consecutive adjustment processes are made clear, whereby further adjustment processes can be carried out for the ensuring process.

The embodiments of the system demonstrate corresponding advantages as corresponding embodiments of the method described above.

### DESCRIPTION OF DRAWINGS

The present invention will be better understood with reference to the following detailed description read together with the attached drawings, where the same reference numbers refer to the same parts throughout the several views, and where:
Figure 1a illustrates schematically a side view of a motor vehicle equipped with an air guiding device according to one embodiment of the present invention;
Figure 1b illustrates schematically a plan view of the vehicle in Figure 1a;
Figures 2a-c illustrate schematically an air guiding device arranged at a motor vehicle placed into different conditions;
Figure 2d illustrates schematically the end conditions and the adjustability of the roof-mounted air guiding device in Figures 2a-c;
Figure 3a illustrates schematically a parameter corresponding to the adjustment force required as a function of the condition for a reference adjustment process and for adjustment processes during travel, for an air guiding device according to the present invention;
Figure 3b illustrates schematically the comparison between parameters for the reference adjustment process and the adjustment process during travel according to Figure 3a, for different conditions of the roof-mounted air guiding device;
Figure 4 illustrates schematically a block diagram of a system in order to ensure acceptable function of an air guiding device at a vehicle according to one embodiment of the present invention;
Figure 5 illustrates schematically a block diagram of a method in order to ensure acceptable function of an air guiding device at a vehicle; and
Figure 6 illustrates schematically a computer according to one embodiment of the present invention.

### DESCRIPTION OF EMBODIMENTS

In this document, the term "link" refers to a communication link that may be a physical line, such as an opto-electronic communication line, or a non-physical line, such as a wireless connection, for example a radio link or microwave link. Furthermore, the term "to ensure acceptable function" refers to the achievement of the intended function of a roof-mounted air guiding device with respect to a reduction in air resistance in a reliable manner.

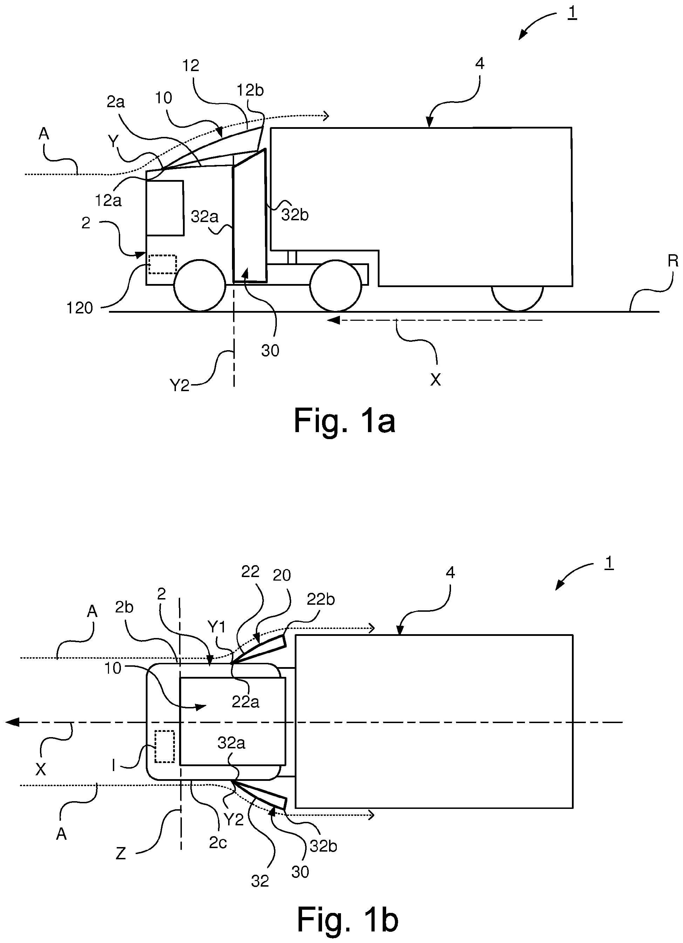

Figure 1a illustrates schematically a side view of a motor vehicle equipped with an air guiding device 10, 20, 30 according to one embodiment of the present invention, and Figure 1b illustrates schematically a plan view of the vehicle in Figure 1a. The vehicle comprises a system I to ensure acceptable function of an air guiding device according to the present invention.

The vehicle 1 has a longitudinal axis X parallel to the normal direction of travel of the vehicle. The vehicle comprises a first forward vehicle body 2 and a second rear vehicle body 4 arranged behind the first vehicle body 2.

The first vehicle body has a cabin section with a roof 2a and two opposing sides 2b, 2c.

The second vehicle body 4 is arranged behind the roofed cabin section. The second vehicle body 4 extends upwards beyond the first vehicle body 2 and above the roof 2a. The second vehicle body 4 extends sideways beyond the first vehicle body 2, i.e. it extends outside of the sides 2b, 2c of the first vehicle body 2.

According to the embodiment illustrated in Figures 1a-b, the vehicle 1 is constituted by a truck 1 where the first vehicle body 2 is constituted by a drawing vehicle 2 and the second vehicle body 4 is constituted by a trailer 4. The trailer 4 can be exchanged, and thus the height and width of such a trailer may vary.

The first vehicle body 2 may constitute also a vehicle body arranged to support load itself, in which case the load constitutes the second vehicle body 4. Such a load may vary.

The vehicle may be constituted by any suitable vehicle at all with a first vehicle body and a second vehicle body that extends outwards beyond the first vehicle body.

The first vehicle body 2 may be constituted by a car and the second vehicle body 4 by a caravan that extends beyond the car, or by a trailer that either on its own and/or with a load extends above and/or to the sides of the car.

The vehicle 1 is equipped with three air guiding devices 10, 20, 30: a roof-mounted air guiding device 10 arranged on the roof 2a of the first vehicle body 2, a first sideways air guiding device 20 arranged on one side 2b, and a sideways air guiding device arranged on the second side 2c of the first vehicle body 2. Each air guiding device 10, 20, 30 is arranged to be supported by means of the said first vehicle body.

Each air guiding device 10, 20, 30 can be adjusted relative to the said longitudinal axis X for the purpose of reducing air resistance. Each air guiding device 10, 20, 30 is arranged to direct in a manner that reduces air resistance air A that the vehicle 1 displaces during travel.

Each air guiding device 10, 20, 30 comprises an air guide 12, 22, 32 with a forward end 12a, 22a, 32a and a rear end 12b, 22b, 32b with respect to the forwards direction of travel of the vehicle.

Thus, the roof-mounted air guiding device 10 has a roof-mounted air guide 12 with a forward end 12a and a rear end 12b, where the roof-mounted air guide 12 has a tilt forwards and downwards from the rear end 12b to the forward end 12a, forming an angle relative to the longitudinal axis X.

Thus, the sideways air guiding device 20 has a sideways air guide 22 with a forward end 22a and a rear end 22b, where the sideways air guide 22 has a tilt forwards and inwards relative to the side of the vehicle from the rear end 22b to the forward end 22a, forming an angle relative to the longitudinal axis X.

Thus, the sideways air guiding device 30 has a sideways air guide 32 with a forward end 32a and a rear end 32b, where the sideways air guide 32 has a tilt forwards and inwards relative to the side of the vehicle from the rear end 32b to the forward end 32a, forming an angle relative to the longitudinal axis X.

Each air guide 12, 22, 32 can have any suitable design at all in order to direct air for the purpose of reducing air resistance during travel of the vehicle 1.

The roof-mounted air guide 12 can be adjusted through rotation around an axis Z that runs in the transverse direction of the vehicle transverse to the longitudinal direction of the vehicle and perpendicular to the longitudinal axis X in association with the forward end 12a.

The sideways air guide 22 can be adjusted through rotation around an axis Y1 that runs in the vertical direction of the vehicle transverse to the longitudinal direction of the vehicle and perpendicular to the longitudinal axis X in association with the forward end 22a.

The sideways air guide 32 can be adjusted through rotation around an axis Y2 that runs in the vertical direction of the vehicle transverse to the longitudinal direction of the vehicle and perpendicular to the longitudinal axis X in association with the forward end 32a.

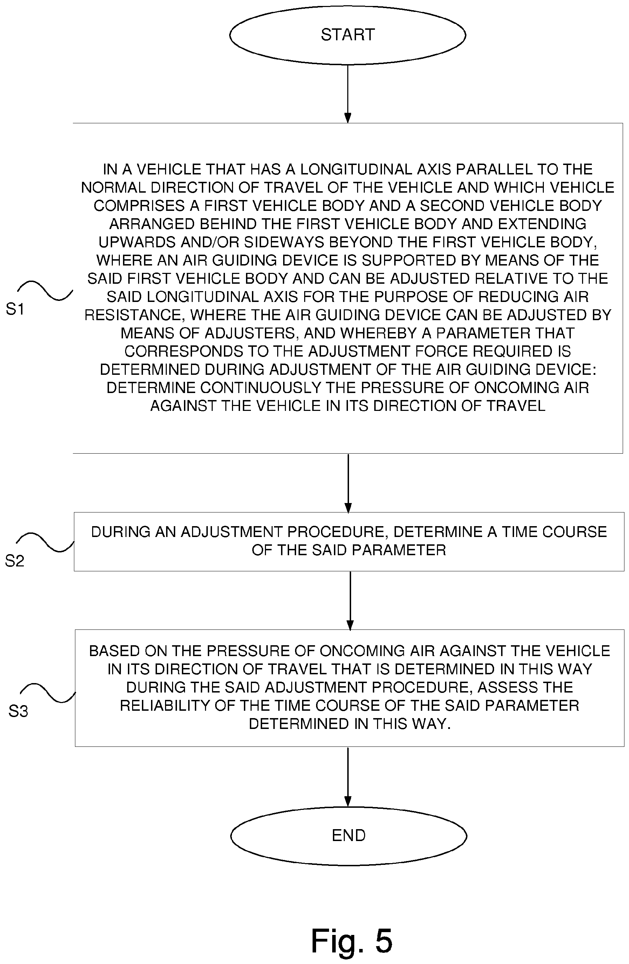

Each air guiding device 10, 20, 30 can be adjusted by means of adjusters, not shown in Figures 1a-b. Thus, each air guiding device 10, 20, 30 comprises in this case adjusters for the adjustment of air guides 12, 22, 32. The adjusters are described in association with Figure 5. The said adjusters may be constituted by any suitable adjuster at all in order to adjust an air guiding device. The said adjusters comprise, according to one embodiment, an electric motor. The said adjusters comprise, alternatively, a pneumatic or hydraulic motor.

The vehicle comprises means 120 to determine continuously the pressure of oncoming air against the vehicle in its direction of travel. The means 120 to determine continuously the pressure of oncoming air against the vehicle in its direction of travel includes, according to one variant, the air quantity gauge of the vehicle.

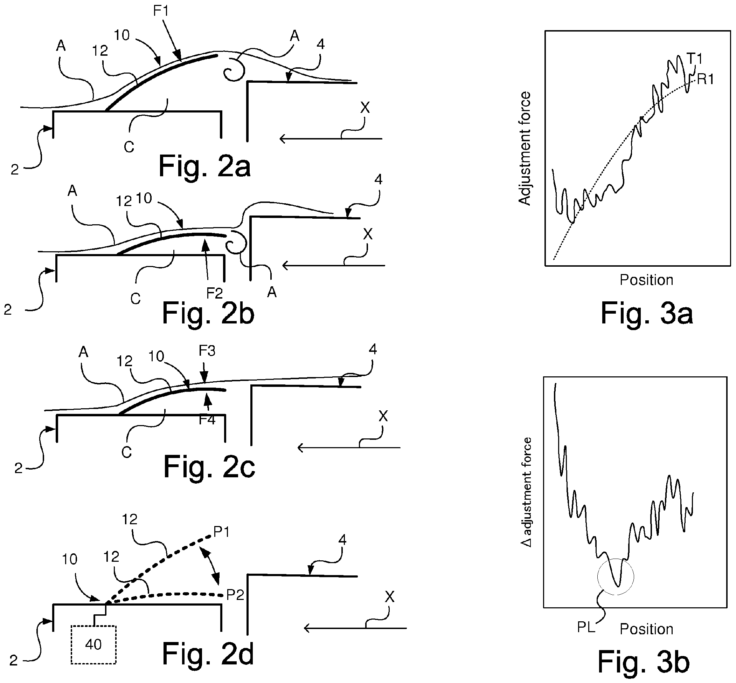

Figures 2a-c illustrate schematically an air guiding device 10 arranged at a motor vehicle placed into different conditions where the flow of air A directed by means of the air guiding device 10 is illustrated for the various conditions. The vehicle is, according to one variant, constituted by the vehicle 1 illustrated in Figures 1a-b and has consequently a first vehicle body 2 and a second vehicle body 4 that extends upwards and/or sideways beyond the first vehicle body 2.

Figure 2a illustrates a condition in which the rear end at the air guide 12 is significantly higher than the height at the rear vehicle body 4, Figure 2b illustrates where the rear end at the air guide 12 is significantly lower than the height at the rear vehicle body 4, and Figure 2c illustrates where the rear end at the air guide 12 is correctly adjusted relative to the rear vehicle body 4.

The air guiding device is here illustrated as roof-mounted air guiding device 10 with roof-mounted air guide 12. It would be possible that the air guiding device constitute also the sideways air guiding device 20 or the sideways air guiding device 30.

The vehicle when travelling will be subject to load from the air, where the load from the air depends on the angle at the air guide 12 relative to the longitudinal axis X parallel to the normal direction of travel of the vehicle, and on the condition of the air guide 12 relative to the rear vehicle body 4. The load due to air that flows against the surface of the air guide increases as the angle relative to the axis X increases. Air that flows past creates a reduced air pressure above the roof-mounted air guide, and consequently a lifting force that acts on the air guide 12.

The air guide creates a compartment C between the first vehicle body 2 and the air guide 12.

In Figure 2a, where the air guide of the air guiding device 10 is adjusted to a condition such that the rear end at the roof-mounted air guide 12 is significantly higher than the height of the rear vehicle body, an excess pressure and a reactive force F1 will be created.

In Figure 2b, where the air guide of the air guiding device 10 is adjusted to a condition such that the rear end at the roof-mounted air guide 12 is significantly lower than the height of the rear vehicle body, a negative pressure and a reactive force F2 will be created.

In Figure 2c, where the air guide of the air guiding device 10 is adjusted to a condition such that the rear end at the roof-mounted air guide 12 essentially corresponds to the height of the rear vehicle body, air will flow evenly over the air guide 12 and onwards over the second vehicle body 4. In this condition, a reactive force F3 directed against the air guide from outside, in accordance with the reactive force F1 from the condition shown in Figure 2a, and an opposing reactive force F4 directed from inside, in accordance with the reactive force F2 in the condition shown in Figure 2b, will essentially cancel each other out.

Figure 2d illustrates schematically the end conditions and the adjustability of the roof-mounted air guiding device 10 shown in Figures 2a-c.

The air guiding device is here illustrated as roof-mounted air guiding device 10 with roof-mounted air guide 12. It would be possible that the air guiding device constitute also the sideways air guiding device 20 or the sideways air guiding device 30.

The air guiding device 10 can be adjusted during an adjustment process between a first condition P1 and a second condition P2. The air guide 10 can thus be adjusted between the first condition P1, in which condition the air guide has an angle relative to the longitudinal axis X parallel to the normal direction of travel of the vehicle that is relatively large, and the second condition P2, in which condition the air guide has an angle relative to the longitudinal axis X that is relatively small.

The air guiding device 10 and thus also the air guide 12 can be adjusted by means of adjusters 40 between the first condition P1 and the second condition P2.

Figure 3a illustrates schematically a parameter corresponding to the adjustment force required as a function of the condition for reference adjustment processes and for adjustment processes during travel, for an air guiding device according to the present invention. The air guiding device is constituted by a roof-mounted air guiding device 10 according to Figure 2d.

The adjustment force corresponds to the force that is required for the adjuster 40 to adjust the air guiding device 10 by rotating the air guide 12 between the conditions P1 and P2. For example, for an adjuster in the form of an electric motor, the adjustment force corresponds to the electrical current required.

The dotted curve illustrates a reference adjustment process arranged to take place when the vehicle is stationary or travelling at low speed. The term "low speed" is used to denote a speed at which the air against the vehicle does not significantly influence the adjustment force required to adjust the air guide.

The reference adjustment process constitutes an adjustment process between the first condition P1 and the second condition P2, according to Figure 2d. In this case, the reference adjustment process takes place in the form of a sweep between the condition P1 and the condition P2. The reference adjustment process can be denoted also as a "reference sweep".

The adjustment force increases with the condition, i.e. with the angle relative to the longitudinal axis X and, here, the height at rear end of the air guide 10 relative to the rear vehicle body 4.

The continuous curve illustrates an adjustment process while travelling, known as an "adjustment process during travel", arranged to take place while travelling, with a speed at which air against the vehicle influences the adjustment force required to adjust the air guide.

Similarly to the reference adjustment process, the adjustment process during travel constitutes an adjustment process between the first condition P1 and the second condition P2, according to Figure 2d. In this case, the adjustment process during travel takes place in the form of a sweep between the condition P1 and the condition P2. The adjustment process during travel can be referred to also as a "travelling sweep".

The adjustment force is influenced by the condition of the air guide, i.e. the angle relative to the longitudinal axis X and, here, the height at the rear end of the air guide 10 relative to the rear vehicle body 4.

Figure 3b illustrates schematically a comparison between parameters for the reference adjustment process and the adjustment process during travel according to Figure 3a, for different conditions of the roof-mounted air guiding device.

Thus, by comparing the reference adjustment process with the adjustment process during travel, it is possible to determine the condition at which the lowest air resistance will be experienced during travel. This condition corresponds to the condition at which the difference in adjustment force between the adjustment forces at different conditions during the reference adjustment process and the adjustment force at corresponding conditions of the adjustment process during travel, the adjustment force, is lowest. By making this comparison, the mechanism at the air guide is taken into consideration, i.e. it is taken into consideration also that the air guide can move more slowly or more lightly purely mechanically in certain conditions.

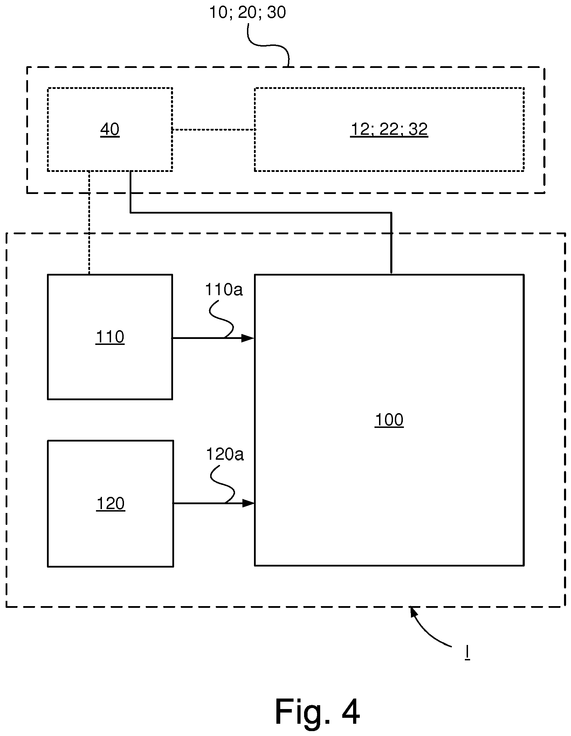

Figure 4 illustrates schematically a block diagram of a system I to ensure acceptable function of an air guiding device 10; 20; 30 at a vehicle according to one embodiment of the present invention.

The system I comprises an electronic control unit 100.

The system I comprises means 110 to determine a parameter that corresponds to the adjustment force required during adjustment of the air guiding device 10; 20; 30. The means 110 to determine a parameter corresponding to the adjustment force required comprises any suitable sensor at all for such a determination. The means 110 to determine a parameter corresponding to the adjustment force required is connected to the adjuster 40 in order to determine the parameter. The adjuster 40 is constituted, according to one variant, by an electric motor, whereby the means 110 is arranged to determine the electrical current that is required to adjust the air guiding device 10; 20; 30, i.e. the air guide 12; 22; 32 at the air guiding device 10; 20; 30.

The system I comprises means 100, 110 to determine during an adjustment process a time course of the said parameter. The means 100, 110 include the electronic control unit 100 and the means 110.

The system I comprises means 120 to determine continuously the pressure of oncoming air against the vehicle in its direction of travel. The means to determine continuously the pressure of oncoming air against the vehicle in its direction of travel includes, according to one variant, means that are already existing at the vehicle, which means includes, according to one variant, the air quantity gauge of the vehicle, and according to one variant the mass flow sensor arranged at the air intake of the engine.

The system I comprises means 100 to assess, based on the pressure of oncoming air against the vehicle in its direction of travel that has been determined in this way during the said adjustment procedure, the reliability of the time course of the said parameter determined in this way. The means 100 to assess the reliability of the time course of the said parameter determined in this way comprises the electronic control unit 100.

The system I comprises means 100 to determine whether the time course of the said parameter that was determined during the adjustment process took place at an unambiguous and reliably determined pressure. The term "unambiguous and reliably determined pressure" includes that the air pressure, and consequently the amount of air, incoming against the vehicle in its direction of travel during the said adjustment process did not significantly deviate from the air pressure of incoming air against the vehicle in its direction of travel determined continuously during a non-adjustment process at the air guiding device. Anomalous conditions may be, for example, that the air guiding device has been influenced by gusts of wind, displaced air from oncoming vehicles or equivalent, which leads to the parameter that has been determined corresponding to the optimal condition for the lowest possible air resistance may be erroneous, such that the air guiding device is adjusted to a non-optimal condition, which results in an increased fuel consumption. The means 100 to determine whether the time course of the said parameter that was determined during the adjustment process took place at an unambiguous and reliably determined pressure comprises the electronic control unit 100.

The system I comprises means to adapt, in the event that the pressure that is determined is determined to be not unambiguous or reliable, the interpretation of the time course of the said parameter that has been determined during the adjustment process.

The means to adapt, in the event that the pressure that is determined is determined to be not unambiguous or reliable, the interpretation of the time course of the said parameter that has been determined during the adjustment process comprises means to determine a further time course of the said parameter under essentially corresponding conditions with respect to the motion of the vehicle, including the subsequent assessment of reliability. In this case, it is again determined by means of the means whether the time course of the said parameter that was determined during the adjustment process took place at an unambiguous and reliably determined pressure, whereby, in the event that the pressure was determined to be ambiguous and unreliable, to adapt the interpretation [syntax passive required= "the interpretation is adapted"] of the time course of the said parameter that was determined during the adjustment process, which, according to one variant, takes place in a corresponding manner with respect to the determination of a further adjustment process.

The said conditions include the vehicle being stationary or being driven at a low speed. The means 100, 110 is in this case arranged to determine during a first reference adjustment process a time course of the said parameter, and to determine at essentially corresponding conditions with respect to the travel of the vehicle during at least one further reference adjustment process a time course of the said parameter. The reference adjustment process takes place through the air guiding device being adjusted during a reference sweep between a first and a second condition, as explained in association with Figure 2d.

The said conditions include the vehicle being stationary or being driven at a low speed. The means 100, 110 is in this case arranged to determine during a first adjustment process during travel a time course of the said parameter, and to determine at essentially corresponding conditions with respect to the travel of the vehicle during at least one further adjustment process during travel a time course of the said parameter. The adjustment process during travel takes place through the air guiding device being adjusted during a reference sweep between a first and a second condition, as explained in association with Figure 2d.

The means to adapt, in the event that the pressure that is determined is determined to be not unambiguous or reliable, the interpretation of the time course of the said parameter that has been determined during the adjustment process includes means for the correction of the time course of the said parameter determined in this way on the basis of the said pressure that has been determined during the adjustment process. The means for the correction of the time course of the said parameter determined in this way on the basis of the said pressure that has been determined during the adjustment process comprises the electronic control unit. The means for the correction of the time course of the said parameter determined in this way on the basis of the said pressure that has been determined during the adjustment process includes an algorithm configured to determine the extent to which the time course of the parameter was influenced by the anomalous air pressure and to adapt the time course of the parameter to a non-anomalous air pressure that has been determined.

The system comprises in this case means 40, 100 to control the air guiding device 10; 20; 30 to carry out the said first and the said further adjustment process. The means 40, 100 to control the air guiding device 10; 20; 30 comprises the electronic control unit. The means 40, 100 to control the air guiding device 10; 20; 30 comprises the adjuster 40.

The means 40, 100 to control the air guiding device 10; 20; 30 is arranged also to control the air guiding device 10; 20; 30 such that it adjusts the air guiding device to its condition determined for the least possible air resistance when travelling.

The electronic control unit 100 is connected such that it transfers signals to the means 110 to determine a parameter that corresponds to the adjustment force required during adjustment of the air guiding device through a link 110a. The electronic control unit 100 is arranged to receive through the link 110a a signal from the means 110 representing data for the time course of the parameter corresponding to the adjustment force required during adjustment of the air guiding device during the adjustment process.

The electronic control unit 100 is connected such that it transfers signals to the mean 120 to determine continuously the pressure of incoming air against the vehicle in its direction of travel through a link 120a. The electronic control unit 100 is arranged to receive through the link 120a a signal from the means 120 representing data for the pressure of incoming air against the vehicle in its direction of travel.

The electronic control unit 100 is arranged to process the said data for the pressure of incoming air against the vehicle in its direction of travel in order to determine the pressure during the adjustment process and during non-adjustment of the air guiding device in order to assess the reliability of the time course of the said parameter determined in this way.

The electronic control unit 100 is arranged, in particular, to process the said data for the pressure of incoming air against the vehicle in its direction of travel in order to determine the pressure during the adjustment process and during non-adjustment of the air guiding device in order to determine whether the time course of the said parameter that was determined during the adjustment process took place at an unambiguous and reliably determined pressure.

The electronic control unit is arranged to adapt, in the event that the pressure that is determined is determined to be not unambiguous or reliable, the interpretation of the time course of the said parameter determined during the adjustment process.

The electronic control unit 100 is connected such that it transfers signals to the adjuster 40 through a link 110b. The electronic control unit 100 is arranged to transmit through the link 110a a signal to the adjuster 40 representing data for the adjustment process for the control of the air guiding device during the adjustment process, including at least one further adjustment process.

The electronic control unit 100 is arranged according to one variant, in the event that the pressure that is determined during the adjustment process is determined to be not unambiguous or reliable, to determine at essentially corresponding conditions with respect to the travel of the vehicle during one further adjustment process a time course for the said parameter, and to assess the reliability of the time course of the said parameter determined in this way. The electronic control unit 100 is consequently arranged, in the event that the pressure that is determined during the adjustment process is determined to be not unambiguous or reliable, to transmit a signal to the adjuster 40 to carry out a further adjustment process under corresponding conditions with respect to the travel of the vehicle, and to receive a signal from the means 110 to determine the parameter corresponding to the adjustment force required, in order to determine in this way the time course of the parameter during the adjustment process. The electronic control unit 100 is then arranged to assess the reliability of the time course of the said parameter determined in this way.

The electronic control unit 100 is arranged, according to one variant, in the event that the pressure that is determined during the adjustment process is determined to be not unambiguous or reliable, to correct the time course of the said parameter determined in this way on the basis of the said pressure that has been determined during the adjustment process.

The electronic control unit 100 is arranged, in the event that the pressure that is determined during the adjustment process is determined to be unambiguous and reliable, to consider the time course during the adjustment process to be reliable.

The electronic control unit 100 is arranged to transmit through the link 110b a signal to the adjuster 40 for the setting of the condition of the air guide 12, 22, 32 of the roof-mounted air guiding device 10; 20; 30 based on the lowest determined difference in adjustment force between the reference adjustment process determined in this way and the adjustment process during travel such that the roof-mounted air guiding device 10; 20; 30 is adjusted to the condition that leads to lowest air resistance.

Figure 5 illustrates schematically a block diagram of a method in order to ensure acceptable function of an air guiding device at a vehicle, which vehicle has a longitudinal axis parallel to the normal direction of travel of the vehicle and which vehicle comprises a first vehicle body and a second vehicle body arranged behind the first vehicle body and extending upwards and/or sideways beyond the first vehicle body, whereby the air guiding device is supported by means of the said first vehicle body and can be adjusted relative to the said longitudinal axis for the purpose of reducing air resistance, whereby the air guiding device can be adjusted by means of adjusters, and whereby a parameter that corresponds to the adjustment force required is determined during adjustment of the air guiding device according to one embodiment of the present invention.

According to one embodiment, the method to ensure the acceptable function of an air guiding device at a vehicle comprises a first step, S1. The pressure of incoming air against the vehicle in its direction of travel is continuously determined during this step.

According to one embodiment, the method to ensure the acceptable function of an air guiding device at a vehicle comprises a second step, S2. A time course for the said parameter is determined during an adjustment process during this step.

According to one embodiment, the method to ensure the acceptable function of an air guiding device at a vehicle comprises a third step, S3. The reliability of the time course of the said parameter determined in this way is assessed during this step, based on the pressure of oncoming air against the vehicle in its direction of travel that is determined in this way during the said adjustment procedure.

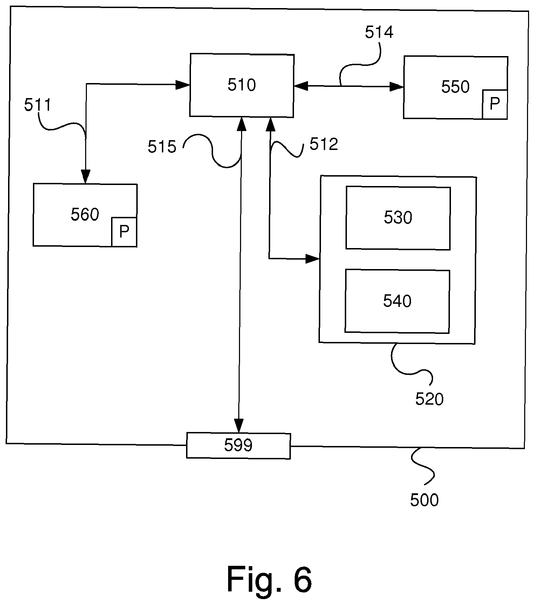

With reference to Figure 6, there is shown a drawing of a design of an arrangement 500. The control unit 100 that has been described with reference to Figure 3 can comprise in one execution the arrangement 500. The arrangement 500 comprises a non-transient memory 520, a data processing unit 510 and a read/write memory 550. The non-transient memory 520 has a first section of memory 530 in which a computer program, such as an operating system, is stored in order to control the function of the arrangement 500. Furthermore, the arrangement 500 comprises a bus controller, a serial communication port, I/O means, an A/D converter, a unit for the input and transfer of time and date, an event counter and an interrupt controller (not shown in the drawing). The non-transient memory 520 has also a second section of memory 540.

There is provided a computer program P that comprises routines to ensure the acceptable function of an air guiding device at a vehicle, which vehicle has a longitudinal axis parallel to the normal direction of travel of the vehicle, and which vehicle comprises a first vehicle body and a second vehicle body arranged behind the first vehicle body and extending upwards and/or sideways beyond the first vehicle body, whereby the air guiding device is supported by means of the said first vehicle body and can be adjusted relative to the said longitudinal axis for the purpose of reducing air resistance, whereby the air guiding device can be adjusted by means of adjusters and whereby a parameter that corresponds to the adjustment force required is determined during adjustment of the air guiding device according to the innovative method. The program P comprises routines to determine continuously the pressure of oncoming air against the vehicle in its direction of travel. The program P comprises routines to determine during an adjustment procedure a time course of the said parameter. The program P comprises routines to, based on the pressure of oncoming air against the vehicle in its direction of travel that is determined in this way during the said adjustment procedure, to assess the reliability of the time course of the said parameter determined in this way. The program P may be stored in an executable form or in a compressed form in a memory 560 and/or in a read/write memory 550.

When it is described that the data processing unit 510 carries out a certain function, it is to be understood that the data processing unit 510 carries out a certain part of the program that is stored in the memory 560, or a certain part of the program that is stored in the read/write memory 550.

The data processing arrangement 510 can communicate with a data port 599 through a data bus 515. The non-transient memory 520 is intended for communication with the data processing unit 510 through a data bus 512. The separate memory 560 is intended to communicate with the data processing unit 510 through a data bus 511. The read/write memory 550 is arranged to communicate with the data processing unit 510 through a data bus 514. Links associated with the control units 200; 300, for example, may be connected to the data port 599.

When data is received at the data port 599 it is temporarily stored in the second section of memory 540. When the data that has been received has been temporarily stored, the data processing unit 510 is prepared for the execution of code in a manner that has been described above. The signals received on the data port 599 can be used by the arrangement 500 in order to determine continuously the pressure of incoming air against the vehicle in its direction of travel. The signals received on the data port 599 can be used by the arrangement 500 to determine a time course of the said parameter during an adjustment process. The signals received by the data port 599 can be used by the arrangement 500 to assess, based on the pressure of oncoming air against the vehicle in its direction of travel that is determined in this way during the said adjustment procedure, the reliability of the time course of the said parameter determined in this way.

Parts of the methods described here may be carried out by the arrangement 500 with the aid of the data processing unit 510, which runs the program stored in the memory 560 or in the read/write memory 550. When the arrangement 500 runs the program, the method described here is executed.

The description above of the preferred embodiments of the present invention has been given for the purposes of illustration and description. It is not intended to be exhaustive or to limit the invention to the variants that have been described. Many modifications and variations will be obvious for one skilled in the arts. The embodiments have been selected and described in order to best describe the principles of the invention and its practical applications, and thus to make it possible for one skilled in the arts to understand the invention for various embodiments and with the various modifications that are appropriate for the intended use.

## Claims

1. A method to ensure acceptable function of an air guiding device (10; 20; 30) at a vehicle (1), which vehicle has a longitudinal axis (X) parallel to the normal direction of travel of the vehicle (1) and which vehicle (1) comprises a first vehicle body (2) and a second vehicle body (4) arranged behind the first vehicle body (2) and extending upwards and/or sideways beyond the first vehicle body (2), whereby the air guiding device (10; 20; 30) is supported by means of the said first vehicle body (2) and can be adjusted relative to the said longitudinal axis (X) for the purpose of reducing air resistance, whereby the air guiding device (10; 20; 30) can be adjusted by means of adjusters (40) and whereby a parameter that corresponds to the adjustment force required is determined during adjustment of the air guiding device (10; 20;30), **characterised by** the following steps: to determine (S1) continuously the pressure of oncoming air (A) against the vehicle (1) in its direction of travel; to determine (S2) during an adjustment procedure a time course of the said parameter; and based on the pressure of oncoming air against the vehicle (1) in its direction of travel that is determined in this way during the said adjustment procedure, to assess (S3) the reliability of the time course of the said parameter determined in this way.

2. The method according to claim 1, comprising the step of determining whether the time course of the said parameter that was determined during the adjustment process took place at an unambiguous and reliably determined pressure.

3. The method according to claim 1 or 2, comprising the step to adapt, in the event that the pressure that is determined is determined to be not unambiguous or reliable, the interpretation of the time course of the said parameter that has been determined during the adjustment process.

4. The method according to claim 3, whereby the step of adapting the said interpretation includes the determination of a further time course of the said parameter under essentially corresponding conditions with respect to the motion of the vehicle, including the subsequent assessment of reliability.

5. The method according to claim 3 or 4, whereby the step of adapting the said interpretation includes correction of the time course of the said parameter determined in this way on the basis of the said pressure that has been determined during the adjustment process.

6. A system (I) to ensure acceptable function of an air guiding device (10; 20; 30) at a vehicle (1), which vehicle (1) has a longitudinal axis (X) parallel to the normal direction of travel of the vehicle (1) and which vehicle (1) comprises a first vehicle body (2) and a second vehicle body (4) arranged behind the first vehicle body (2) and extending upwards and/or sideways beyond the first vehicle body (2), whereby the air guiding device (10; 20; 30) is arranged to be supported by means of the said first vehicle body (2) and can be adjusted relative to the said longitudinal axis (X) for the purpose of reducing air resistance, whereby the air guiding device (10; 20; 30) can be adjusted by means of adjusters (40) and whereby means (110) are available to determine a parameter that corresponds to the adjustment force required during adjustment of the air guiding device (10; 20; 30), **characterised by** means to determine continuously the pressure of oncoming air against the vehicle in its direction of travel; means to determine during an adjustment procedure a time course of the said parameter; and means to assess, based on the pressure of oncoming air against the vehicle in its direction of travel that is determined in this way during the said adjustment procedure, the reliability of the time course of the said parameter determined in this way.

7. The system according to claim 6, comprising means to determine whether the time course of the said parameter that was determined during the adjustment process took place at an unambiguous and reliably determined pressure.

8. The system according to claim 6 or 7, comprising means to adapt, in the event that the pressure that is determined is determined to be not unambiguous or reliable, the interpretation of the time course of the said parameter that has been determined during the adjustment process.

9. The system according to claim 8, whereby the means to adapt the said interpretation includes means to determine a further time course of the said parameter under essentially corresponding conditions with respect to the motion of the vehicle, including the subsequent assessment of reliability.

10. The system according to claim 8 or 9, whereby the means to adapt the said interpretation includes means to correct the time course of the said parameter determined in this way on the basis of the said pressure that has been determined during the adjustment process.

11. The system according to any one of claims 6-10, whereby the said adjustment process is arranged to take place when the vehicle is stationary or travelling at low speed.

12. The system according to any one of claims 6-11, whereby the said adjustment process is arranged to take place during travel.

13. A motor vehicle comprising a system (I) according to any one of claims 6-12.

14. A computer program (P) to ensure acceptable function of an air guiding device at a vehicle, where the said computer program (P) comprises program code that, when it is run by an electronic control unit (100) or by another computer (500) connected to the electronic control unit (100), causes the electronic control unit to carry out the steps according to claims 1-5.

15. A computer program product comprising a digital storage medium that stores the computer program according to claim 14.

## Patentansprüche

1. Verfahren zur Sicherstellung der zuverlässigen Funktion einer Luftführungseinrichtung (10; 20; 30) an einem Fahrzeug (1), wobei das Fahrzeug eine Längsachse (X) parallel zur normalen Fahrtrichtung des Fahrzeugs (1) hat, und wobei das Fahrzeug (1) einen ersten Fahrzeugaufbau (2) und einen hinter dem ersten Fahrzeugaufbau (2) angeordneten und sich nach oben und/oder seitlich über den ersten Fahrzeugaufbau (2) hinaus erstreckenden zweiten Fahrzeugaufbau (4) aufweist, wobei die Luftführungseinrichtung (10; 20; 30) durch den ersten Fahrzeugaufbau (2) glagert wird und relativ zur Längsachse (X) zum Zweck der Verringerung des Luftwiderstands ausgerichtet werden kann, wobei die Luftführungseinrichtung (10; 20; 30) mittels Verstellelementen (40) ausgerichtet werden kann und wobei ein Parameter bestimmt wird, der der während der Ausrichtung der Luftführungseinrichtung (10; 20; 30) erforderlichen Verstellkraft entspricht, **gekennzeichnet durch** die folgenden Schritte:
kontinuierliches Bestimmen (S1) des Drucks der Gegenluft (A) gegen das Fahrzeug (1) in der Fahrtrichtung; Bestimmen (S2) eines zeitlichen Verlaufs des Parameters während einer Ausrichtungsprozedur; und basierend auf dem Druck der Gegenluft (A) gegen das Fahrzeug (1) in der Fahrtrichtung, der auf diese Weise während der Ausrichtungsprozedur bestimmt wird, Bewerten (S3) der Zuverlässigkeit des zeitlichen Verlaufs des auf diese Weise bestimmten Parameters.

2. Verfahren nach Anspruch 1, das den Schritt der Bestimmung aufweist, ob der zeitliche Verlauf des Parameters, der während des Ausrichtungsprozesses bestimmt wurde, bei einem eindeutigen und zuverlässig bestimmten Druck stattfand.

3. Verfahren nach Anspruch 1 oder 2, das den Schritt der Anpassung der Interpretation des zeitlichen Verlaufs des Parameters, der während des Ausrichtungsprozesses bestimmt wurde, in dem Fall aufweist, in dem der bestimmte Druck nicht eindeutig oder zuverlässig bestimmt wurde.

4. Verfahren nach Anspruch 3, wobei der Schritt der Anpassung der Interpretation die Bestimmung eines weiteren zeitlichen Verlaufs des Parameters unter im Wesentlichen entsprechenden Bedingungen bezüglich der Bewegung des Fahrzeugs, einschließlich der nachfolgenden Bewertung der Zuverlässigkeit, aufweist.

5. Verfahren nach Anspruch 3 oder 4, wobei der Schritt der Anpassung der Interpretation die Korrektur des zeitlichen Verlaufs des auf diese Weise bestimmten Parameters auf Basis des während des Ausrichtungsprozesses bestimmten Drucks beinhaltet.

6. System (I) zur Sicherstellung der zuverlässigen Funktion einer Luftführungseinrichtung (10; 20; 30) an einem Fahrzeug (1), wobei das Fahrzeug (1) eine Längsachse (X) parallel zur normalen Fahrtrichtung des Fahrzeugs (1) hat, und wobei das Fahrzeug (1) einen ersten Fahrzeugaufbau (2) und einen hinter dem ersten Fahrzeugaufbau (2) angeordneten und sich nach oben und/oder seitlich über den ersten Fahrzeugaufbau (2) hinaus erstreckenden zweiten Fahrzeugaufbau (4) aufweist, wobei die Luftführungseinrichtung (10; 20; 30) so angeordnet ist, dass sie durch den ersten Fahrzeugaufbau (2) gelagert wird und relativ zur Längsachse (X) zum Zweck der Verringerung des Luftwiderstands ausgerichtet werden kann, wobei die Luftführungseinrichtung (10; 20; 30) mittels Verstellelementen (40) ausgerichtet werden kann, und wobei Mittel (110) zur Bestimmung eines Parameters vorgesehen sind, der der während der Ausrichtung der Luftführungseinrichtung (10; 20; 30) erforderlichen Verstellkraft entspricht, **gekennzeichnet durch** Mittel zur kontinuierlichen Bestimmung des Drucks der Gegenluft gegen das Fahrzeug in der Fahrtrichtung; Mittel zur Bestimmung eines zeitlichen Verlaufs des Parameters während einer Ausrichtungsprozedur; und Mittel zur Bewertung der Zuverlässigkeit des auf diese Weise bestimmten zeitlichen Verlaufs des Parameters auf Basis des Drucks der Gegenluft gegen das Fahrzeug in der Fahrtrichtung, der auf diese Weise während der Ausrichtungsprozedur bestimmt wird.

7. System nach Anspruch 6, das Mittel zur Bestimmung aufweist, ob der zeitliche Verlauf des Parameters, der während des Ausrichtungsprozesses bestimmt wurde, bei einem eindeutigen und zuverlässig bestimmten Druck stattfand.

8. System nach Anspruch 6 oder 7, das Mittel zur Anpassung der Interpretation des zeitlichen Verlaufs des Parameters, der während des Ausrichtungsprozesses bestimmt wurde, in dem Fall aufweist, in dem der bestimmte Druck nicht eindeutig oder zuverlässig bestimmt ist.

9. System nach Anspruch 8, das ein Mittel zur Anpassung der Interpretation Mittel zur Bestimmung eines weiteren zeitlichen Verlaufs des Parameters unter im Wesentlichen entsprechenden Bedingungen bezüglich der Bewegung des Fahrzeugs, einschließlich der nachfolgenden Bewertung der Zuverlässigkeit, aufweist.

10. System nach Anspruch 8 oder 9, wobei das Mittel zur Anpassung der Interpretation Mittel zur Korrektur des zeitlichen Verlaufs des auf diese Weise bestimmten Parameters auf Basis des während des Ausrichtungsprozesses bestimmten Drucks beinhaltet.

11. System nach einem der Ansprüche 6 bis 10, wobei der Ausrichtungsprozess so ausgelegt ist, dass er stattfindet, während das Fahrzeug stationär ist oder mit niedriger Geschwindigkeit fährt.

12. System nach einem der Ansprüche 6 bis 11, wobei der Ausrichtungsprozess so ausgelegt ist, dass er während der Fahrt stattfindet.

13. Kraftfahrzeug, das ein System (I) nach einem der Ansprüche 6 bis 12 aufweist.

14. Computerprogramm (P) zur Sicherstellung der zuverlässigen Funktion einer Luftführungseinrichtung eines Fahrzeugs, wobei das Computerprogramm (P) einen Programmcode aufweist, der beim Ablaufen auf einer elektronischen Steuereinheit (100) oder einem anderen mit der elektronischen Steuereinheit (100) verbundenen Computer (500) die elektronische Steuereinheit veranlasst, die Schritte nach den Ansprüchen 1 bis 5 auszuführen.

15. Computerprogrammprodukt, das ein digitales Speichermedium aufweist, das das Computerprogramm nach Anspruch 14 speichert.

## Revendications

1. Procédé permettant de garantir un fonctionnement acceptable d'un dispositif de guidage d'air (10 ; 20 ; 30) sur un véhicule (1), ledit véhicule étant pourvu d'un axe longitudinal (X) parallèle à la direction normale de déplacement du véhicule (1) et ledit véhicule (1) comprenant une première caisse de véhicule (2) et une seconde caisse de véhicule (4) disposée derrière la première caisse de véhicule (2) et s'étendant vers le haut et/ou latéralement au-delà de la première caisse de véhicule (2), par lequel le dispositif de guidage d'air (10 ; 20 ; 30) est soutenu au moyen de ladite première caisse de véhicule (2) et peut être ajusté par rapport audit axe longitudinal (X) en vue de réduire la résistance de l'air, par lequel le dispositif de guidage d'air (10 ; 20 ; 30) peut être ajusté au moyen de dispositifs d'ajustement (40) et par lequel un paramètre correspondant à la force d'ajustement requise est déterminé lors de l'ajustement du dispositif de guidage d'air (10 ; 20 ; 30), **caractérisé par** les étapes suivantes : déterminer (S1) en continu la pression de l'air entrant (A) contre le véhicule (1) dans sa direction de déplacement ; déterminer (S2) au cours d'une procédure d'ajustement, le laps de temps dudit paramètre ; et, sur la base de la pression de l'air entrant contre le véhicule (1) dans sa direction de déplacement ainsi déterminée au cours de ladite procédure d'ajustement, évaluer (S3) la fiabilité du laps de temps dudit paramètre ainsi déterminé.

2. Procédé selon la revendication 1, comprenant l'étape consistant à déterminer si le laps de temps dudit paramètre qui a été déterminé au cours du processus d'ajustement a eu lieu à une pression claire déterminée de façon fiable et non équivoque.

3. Procédé selon la revendication 1 ou 2, comprenant l'étape consistant à adapter, dans le cas où il est établi que la pression déterminée n'est pas fiable ou non équivoque, l'interprétation du laps de temps dudit paramètre qui a été déterminé au cours du processus d'ajustement.

4. Procédé selon la revendication 3, par lequel l'étape consistant à adapter ladite interprétation comprend la détermination d'un autre laps de temps dudit paramètre dans des conditions essentiellement correspondantes en ce qui concerne le mouvement du véhicule, y compris l'évaluation ultérieure de la fiabilité.

5. Procédé selon la revendication 3 ou 4, par lequel l'étape consistant à adapter ladite interprétation comprend la rectification du laps de temps dudit paramètre ainsi déterminé sur la base de ladite pression qui a été déterminée au cours du processus d'ajustement.

6. Système (I) permettant de garantir un fonctionnement acceptable d'un dispositif de guidage d'air (10 ; 20 ; 30) sur un véhicule (1), ledit véhicule (1) étant pourvu d'un axe longitudinal (X) parallèle à la direction normale de déplacement du véhicule (1) et ledit véhicule (1) comprenant une première caisse de véhicule (2) et une seconde caisse de véhicule (4) disposée derrière la première caisse de véhicule (2) et s'étendant vers le haut et/ou latéralement au-delà de la première caisse de véhicule (2), par lequel le dispositif de guidage d'air (10 ; 20 ; 30) est disposé de sorte à être soutenu au moyen de ladite première caisse de véhicule (2) et peut être ajusté par rapport audit axe longitudinal (X) en vue de réduire la résistance de l'air, par lequel le dispositif de guidage d'air (10 ; 20 ; 30) peut être ajusté au moyen de dispositifs d'ajustement (40) et par lequel des moyens (110) disponibles permettent de déterminer un paramètre correspondant à la force d'ajustement requise lors de l'ajustement du dispositif de guidage d'air (10 ; 20 ; 30), **caractérisé par** des moyens permettant de déterminer en continu la pression de l'air entrant contre le véhicule dans sa direction de déplacement ; des moyens permettant de déterminer, au cours d'une procédure d'ajustement, un laps de temps dudit paramètre ; et des moyens permettant d'évaluer, sur la base de la pression de l'air entrant contre le véhicule dans sa direction de déplacement ainsi déterminée au cours de ladite procédure d'ajustement, la fiabilité du laps de temps dudit paramètre ainsi déterminé.

7. Système selon la revendication 6, comprenant des moyens permettant de déterminer si le laps de temps dudit paramètre défini au cours du processus d'ajustement a eu lieu à une pression non équivoque et déterminée de façon fiable.

8. Système selon la revendication 6 ou 7, comprenant des moyens permettant d'adapter, dans le cas où il est établi que la pression déterminée n'est pas fiable ou non équivoque, l'interprétation du laps de temps dudit paramètre déterminé au cours du processus d'ajustement.

9. Système selon la revendication 8, par lequel les moyens permettant d'adapter ladite interprétation comprennent des moyens permettant de déterminer un autre laps de temps dudit paramètre dans des conditions essentiellement correspondantes en ce qui concerne le mouvement du véhicule, y compris l'évaluation ultérieure de la fiabilité.

10. Système selon la revendication 8 ou 9, par lequel les moyens permettant d'adapter ladite interprétation comprennent des moyens permettant de rectifier le laps de temps dudit paramètre ainsi déterminé sur la base de ladite pression qui a été déterminée au cours du processus d'ajustement.

11. Système selon l'une quelconque des revendications 6 à 10, par lequel ledit processus d'ajustement est prévu pour avoir lieu lorsque le véhicule est à l'arrêt ou se déplace à faible vitesse.

12. Système selon l'une quelconque des revendications 6 à 11, par lequel ledit processus d'ajustement est prévu pour avoir lieu pendant le déplacement.

13. Véhicule à moteur comprenant un système (I) selon l'une quelconque des revendications 6 à 12.

14. Programme informatique (P) permettant de garantir un fonctionnement acceptable d'un dispositif de guidage d'air sur un véhicule, ledit programme informatique (P) comprenant un code de programme qui, lorsqu'il est exécuté par une unité de commande électronique (100) ou un autre ordinateur (500) connecté à l'unité de commande électronique (100), provoque l'exécution des étapes selon les revendications 1 à 5 par l'unité de commande électronique.

15. Programme informatique en tant que produit comprenant un support de stockage numérique qui stocke le programme informatique selon la revendication 14.
